# EUROPEAN PATENT SPECIFICATION

(11) **EP 2 794 735 B1**
(45) Date of publication and mention of the grant of the patent: **17.07.2019**
(21) Application number: 12816064.5
(22) Date of filing: 21.12.2012
(51) Int. Cl.: C08J 5/24, C08J 5/04, B32B 5/06, B32B 5/24, B32B 5/28, B32B 27/38

(54) **IMPROVEMENTS IN OR RELATING TO FIBRE REINFORCED COMPOSITES**
VERBESSERUNGEN AN ODER IM ZUSAMMENHANG MIT VERSTÄRKTEN VERBUNDWERKSTOFFEN
AMÉLIORATIONS DE OU ASSOCIÉES AUX COMPOSITES RENFORCÉS PAR DES FIBRES

(30) Priority: 22.12.2011 EP 11195398; 19.06.2012 EP 12172537
(43) Date of publication of application: 29.10.2014
(73) Proprietor: Hexcel Holding GmbH, 4061 Pasching (AT)
(72) Inventor: POINTER, Wilhelm, 4625 Offenhausen (AT); GANGLBERGER, Thorsten, 4240 Freistadt (AT)
(74) Representative: Pols, Ronald Maarten
(86) International application number: PCT/EP2012/076780
(87) International publication number: WO 2013/093065

(56) References cited:
- EP-A1- 1 279 688
- EP-A2- 0 336 360
- WO-A1-2008/142474
- WO-A1-2011/073111
- WO-A2-01/00405
- US-A1- 2010 136 316
- D. P. Fasce ET AL: "Curing of epoxy resins with in situ-generated substituted ureas", Journal of Applied Polymer Science, vol. 39, no. 2, 20 January 1990 (1990-01-20), pages 383-394, XP055484726, ISSN: 0021-8995, DOI: 10.1002/app.1990.070390215

## Description

The present invention relates to the production of laminar structures by laying up a stack of layers of curable structures in a mould and causing the stack of structures to cure. The invention is particularly concerned with the production of resin based fibre reinforced structures from fibre impregnated with a curable resin such an epoxy resin. Such layers of curable structures in which the resin is uncured are sometimes known as prepregs. In one embodiment the invention is concerned with the production of wind turbine structures, such as shells for the blades of the turbine and spars that support the blades.

The present invention therefore relates to fibre reinforced materials and in particular to prepregs comprising fibres and thermosetting resins which may be stacked to form a preform and subsequently cured to form a reinforced composite material. Such composite materials are known, they are lightweight and of high strength and are used in many structural applications such as in the automobile and aerospace industries and in industrial applications such as wind turbine components such as spars and the shells used to make the blades.

Prepreg is the term used to describe fibres and fabric impregnated or in combination with a resin in the uncured state and ready for curing. The fibres may be in the form of tows or fabrics and a tow generally comprise a plurality of thin fibres. The fibrous materials and resins employed in the prepregs will depend upon the properties required of the cured fibre reinforced material and also the use to which the cured laminate is to be put. The fibrous material is described herein as structural fibre. The resin may be combined with fibres or fabric in various ways. The resin may be tacked to the surface of the fibrous material. The resin may partially or completely impregnate the fibrous material. The resin may impregnate the fibrous material so as to provide a pathway to facilitate the removal of air or gas during processing of the prepreg material.

Various methods have been proposed for the production of prepregs, one of the preferred methods being the impregnation of a moving fibrous web with a liquid, molten or semi-solid uncured thermosetting resin. The prepreg produced by this method may then be cut into sections of the desired length and a stack of the sections cured by heating to produce the final fibre reinforced laminate. Curing may be performed in a vacuum bag which may be placed in a mould for curing as is preferred in the manufacture of wind energy structures such as shells for the blades and spars. Alternatively, the stack may be formed and cured directly in a mould.

One preferred family of resins for use in such applications are curable epoxy resins and curing agents and curing agent accelerators are usually included in the resin to shorten the cure cycle time. Epoxy resins are highly suitable resins although they can be brittle after cure causing the final laminate to crack or fracture upon impact and it is therefore common practice to include toughening materials such as thermoplastics or rubbers in the epoxy resin.

The cure cycles employed for curing prepregs and stacks of prepregs are a balance of temperature and time taking into account the reactivity of the resin and the amount of resin and fibre employed. From an economic point of view it is desirable that the cycle time be as short as possible and so curing agents and accelerators are usually included in the epoxy resin. As well as requiring heat to initiate curing of the resin the curing reaction itself can be highly exothermic and this needs to be taken into account in the time/temperature curing cycle in particular for the curing of large and thick stacks of prepregs as is increasingly the case with the production of laminates for industrial application where large amounts of epoxy resin are employed and high temperatures can be generated within the stack due to the exotherm of the resin curing reaction. Excessive temperatures are to be avoided as they can damage the mould reinforcement or cause some decomposition of the resin. Excessive temperatures can also cause loss of control over the cure of the resin leading to run away cure.

Generation of excessive temperatures can be a greater problem when thick sections comprising many layers of prepreg are to be cured as is becoming more prevalent in the production of fibre reinforced laminates for heavy industrial use such as in the production of wind turbine structures particularly wind turbine spars and shells from which the blades are assembled. In order to compensate for the heat generated during curing it has been necessary to employ a dwell time during the curing cycle in which the moulding is held at a constant temperature for a period of time to control the temperature of the moulding and is cooled to prevent overheating this increases cycle time to undesirably long cycle times of several hours in some instances more than eight hours.

For example a thick stack of epoxy based prepregs such as 60 or more layers can require cure temperatures above 100°C for several hours. However, the cure can have a reaction enthalpy of 150 joules per gram of epoxy resin or more and this reaction enthalpy brings the need for a dwell time during the cure cycle at below 100°C to avoid overheating and decomposition of the resin. Furthermore, following the dwell time it is necessary to heat the stack further to above 100°C (for example to above 125°C) to complete the cure of the resin. This leads to undesirably long and uneconomic cure cycles. In addition, the high temperatures generated can cause damage to the mould or bag materials or require the use of special and costly materials for the moulds or bags.

In addition to these problems there is a desire to produce laminar structures from prepregs in which the cured resin has a high glass transition temperatures (Tg) such as above 80°C to extend the usefulness of the structures by improving their resistance to exposure at high temperatures and/or high humidity for extended periods of time which can cause an undesirable lowering of the Tg. For wind energy structures a Tg above 90°C is preferred. Increase in the Tg may be achieved by using a more reactive resin. However the higher the reactivity of the resin the greater the heat released during curing of the resin in the presence of hardeners and accelerators which increases the attendant problems as previously described.

PCT publication WO2011/073111 is concerned with the provision of a prepreg that, inter alia, can be cured quickly without a damaging exotherm event. The solution provided by WO2011/073111 is to employ a resin which contains an unsaturated monomer capable of free radical polymerisation and also a curable functionality such as epoxy groups. The chemistry is complex and expensive and furthermore requires the presence of peroxide initiators in the resin system to polymerise the unsaturated monomers during cure of the resin.

The present invention aims to overcome the aforesaid problems and/or to provide improvements generally.

According to the invention, there is provided a prepreg, a stack, a use, a process, and a resin matrix as defined in any one of the accompanying claims.

The reactivity of an epoxy resin is indicated by its epoxy equivalent weight (EEW) the lower the EEW the higher the reactivity. The epoxy equivalent weight can be calculated as follows: (Molecular weight epoxy resin)/ (Number of epoxy groups per molecule). Another way is to calculate with epoxy number that can be defined as follows: Epoxy number = 100 / epoxy eq.weight. To calculate epoxy groups per molecule : (Epoxy number x mol.weight) / 100. To calculate mol.weight : (100 x epoxy groups per molecule) / epoxy number. To calculate mol.weight: epoxy eq.weight x epoxy groups per molecule. The present invention is particularly concerned with providing a prepreg that can be based on a reactive epoxy resin that can be cured at a lower temperature with an acceptable moulding cycle time.

The present invention therefore provides a prepreg comprising a mixture of a fibrous reinforcement and an epoxy resin containing from 20% to 85% by weight of an epoxy resin of EEW from 150 to 1500 said resin being curable by an externally applied temperature in the range of 70°C to 110°C.

In an embodiment of the present invention therefore provides a prepreg comprising a mixture of a fibrous reinforcement and an epoxy resin containing from 20% to 85% by weight of an epoxy resin of EEW from 150 to 1500 said resin being curable by an externally applied temperature in the range of 70°C to 110°C, wherein the resin contains from 0.5 to 5 wt% of a urea curing agent, and the resin is cured in the absence of a dicyandiamide based hardener.

We have found that prepreg and its epoxy resin matrix has a reduced cure time, whilst providing good mechanical performance, a desirable T_{g} (glass transition temperature) and good mechanical performance in combination with the fibrous reinforcement of the prepreg.

The invention further provides a stack of prepregs containing an epoxy resin of EEW from 150 to 1500 preferably from 200 to 500 the resin being curable by an externally applied temperature in the range of 70°C to 110°C and containing 40 or more prepreg layers, typically 60 or more layers the stack being of a thickness of at least 35mm.

The invention further provides such a prepreg and stacks of prepregs that can be cured in less than ten hours particularly less than eight hours. In a preferred embodiment the curing resin has a dynamic enthalpy of 150 joules per gram of epoxy resin or lower.

We have found that such desirable prepregs and stacks of prepregs may be obtained using conventionally available epoxy resins if the epoxy resin is cured in the absence of a traditional hardener such as dicyandiamide and in particular we have found that these desirable prepregs can be obtained by use of a urea based curing agent in the absence of a hardener such as dicyandiamide. The relative amount of the curing agent and the epoxy resin that should be used will depend upon the reactivity of the resin and the nature and quantity of the fibre reinforcement in the prepreg. Typically from 0.5 to 10 wt % of the urea based curing agent based on the weight of epoxy resin is used.

The prepregs of this invention are typically used at a different location from where they are manufactured and they therefore require handleability. It is therefore preferred that they are dry or as dry as possible and have low surface tack. It is therefore preferred to use high viscosity resins. This also has the benefit that the impregnation of the fibrous layer is slow allowing air to escape and to minimise void formation.

In order to produce final laminates with substantially uniform mechanical properties it is important that the structural fibres and the epoxy resin be mixed to provide a substantially homogenous prepreg. This requires uniform distribution of the structural fibres within the prepreg to provide a substantially continuous matrix of the resin surrounding the fibres. It is therefore important to minimise the encapsulation of air bubbles within the resin during application to the fibres. It is therefore preferred to use high viscosity resins. The prepregs should contain a low level of voids in order and it is therefore preferred that each prepreg and the prepreg stack has a water pick-up value of less than 25%, more preferably less than 15%, more preferably less than 9%, most preferably less than 3%. The water pick-up test determines the degree of waterproofing or impregnation of prepregs. For this purpose, a specimen of prepreg material is initially weighed and clamped between two plates in such a way that a strip of specimen 5 mm wide protrudes. This arrangement is suspended in the direction of the fibres in a water bath for 5 minutes at room temperature (21 °C). After removing the plates, the specimen is again weighed. The difference in weight is used as a measured value for the degree of impregnation. The smaller the amount of water picked up, the higher the degree of waterproofing or impregnation.

The prepregs of this invention are intended to be laid-up with other composite materials (e.g. other prepregs according to the invention or other prepregs) to produce a prepreg stack which can be cured to produce a fibre reinforced laminate.

The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The epoxy resin has a high reactivity as indicated by an EEW in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The epoxy resin composition also comprises one or more urea based curing agents and it is preferred to use from 0.5 to 10 wt % based on the weight of the epoxy resin of a curing agent, more preferably 1 to 8 wt %, more preferably 2 to 8 wt %, more preferably 0.5 to 5 wt %, more preferably 0.5 to 4 wt % inclusive, or most preferably 1.3 to 4 wt % inclusive.

The urea curing agent may comprise a bis urea curing agent, such as 2,4 toluene bis dimethyl urea or 2,6 toluene bis dimethyl urea and/or combinations of the aforesaid curing agents. Urea based curing agents may also be referred to as "urones".

Other suitable urea based curing agents may comprise: 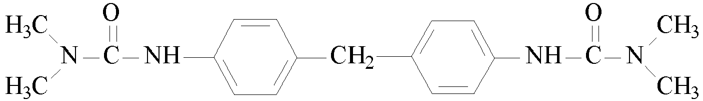 4,4-methylene diphenylene bis(N,N-dimethyl urea) 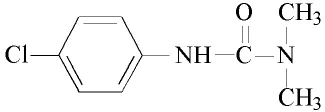 1,1-dimethyl, 3-(4-chlorophenyl)urea 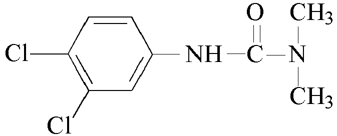 1,1-dimethyl, 3-(3,4-dichlorophenyl)urea 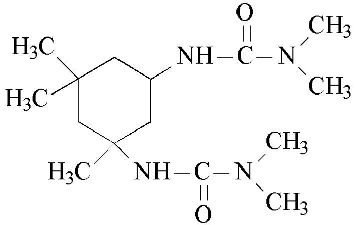 Isophorone bisdimethyl urea 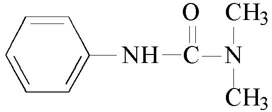 1,1-dimethyl, 3-phenyl urea 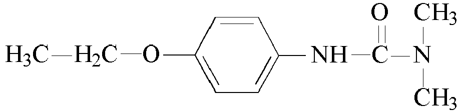 1,1-dimethyl, 3-(4-ethoxyphenyl)urea 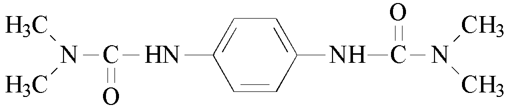 1,1-(4-phenylene)-bis(3,3-dimethyl)urea 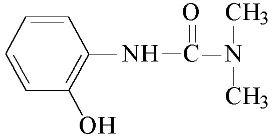 1,1-dimethyl, 3-(2-hydroxyphenyl)urea 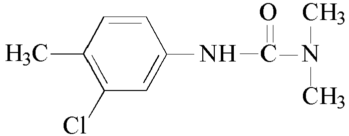 1,1-dimethyl,3-(3-chloro-4-methylphenyl)urea 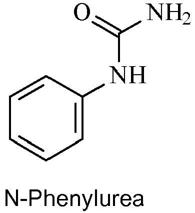 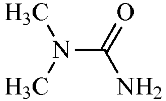 N,N-Dimethylurea 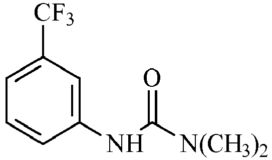 Fluomethuron

Preferred urea based materials are the range of materials available under the commercial name DYHARD® the trademark of Alzchem, urea derivatives, which include bis ureas such as UR500 and UR505.

The structural fibres employed in the prepregs or prepreg stacks of this invention may be tows or fabrics and may be in the form of random, knitted, non-woven, multi-axial or any other suitable pattern. For structural applications, it is generally preferred that the fibres be unidirectional in orientation. When unidirectional fibre layers are used, the orientation of the fibre can vary throughout the prepreg stack. However, this is only one of many possible orientations for stacks of unidirectional fibre layers. For example, unidirectional fibres in neighbouring layers may be arranged orthogonal to each other in a so-called 0/90 arrangement, which signifies the angles between neighbouring fibre layers. Other arrangements, such as 0/+45/-45/90 are of course possible, among many other arrangements.

The structural fibres may comprise cracked (i.e. stretch-broken), selectively discontinuous or continuous fibres. The structural fibres may be made from a wide variety of materials, such as carbon, graphite, glass, metalized polymers, aramid and mixtures thereof. Glass and carbon fibres are preferred carbon fibre, being preferred for wind turbine shells of length above 40 metres such as from 50 to 60 metres. The structural fibres, may be individual tows made up of a multiplicity of individual fibres and they may be woven or non-woven fabrics. The fibres may be unidirectional, bidirectional or multidirectional according to the properties required in the final laminate. Typically the fibres will have a circular or almost circular cross-section with a diameter in the range of from 3 to 20 µm, preferably from 5 to 12 µm. Different fibres may be used in different prepregs used to produce a cured laminate.

Exemplary layers of unidirectional structural fibres are made from HexTow® carbon fibres, which are available from Hexcel Corporation. Suitable HexTow® carbon fibres for use in making unidirectional fibre layers include: IM7 carbon fibres, which are available as fibres that contain 6,000 or 12,000 filaments and weight 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

The structural fibres of the prepregs will be substantially impregnated with the epoxy resin and prepregs with a resin content of from 20 to 85 wt % of the total prepreg weight are preferred. The prepregs of the present invention are predominantly composed of resin and structural fibres.

The stacks of prepregs of this invention may contain more than 40 layers, typically more than 60 layers and at times more than 80 layers. Typically the stack will have a thickness of from 35 to 100mm.

Epoxy resins can become brittle upon curing and toughening materials can be included with the resin to impart durability, although they may result in an undesirable increase in the viscosity of the resin. The toughening material may be supplied as a separate layer such as a veil.

Where the additional toughening material is a polymer it should be insoluble in the matrix epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), polyethersulfone (PES) and polyetherimide (PEI). Polyamides such as nylon 6 (PA6), nylon 11 (PA11) or nylon 12 (PA12), and/or mixtures thereof are preferred.

In an embodiment of the invention, there is provided a prepreg comprising a resin system comprising an epoxy resin containing from 20%to 85% by weight of an epoxy of EEW from 150 to 1500, and 0.5 to 10 wt% of a urea based curing agent, the resin system comprising an onset temperature in the range of from 115 to 125 °C, and/or a peak temperature in the range of from 140 to 150 °C, and/or an enthalpy in the range of from 80 to 120 J/g (Tₒₙₛₑₜ, Tₚₑₐₖ, Enthalpy measured by DSC (=differential scanning calorimetry) in accordance with ISO 11357, over temperatures of from -40 to 270°C at 10 °C/min). Tₒₙₛₑₜ is defined as the onset-temperature at which curing of the resin occurs during the DSC scan, whilst Tₚₑₐₖ is defined as the peak temperature during curing of the resin during the scan. The resin system is particularly suitable for prepreg applications at which a desired cure temperature is below 100°C. The resin system may be processed to cure over a wide processing temperature range, ranging from 75°C up to 120°C. Due to its low exothermic properties M79 can be used for large industrial components, suitable for the cure of thin and thick sections. It demonstrates a good static and dynamic mechanical performance following cure temperatures <100°C.

As discussed, the resin system can be pre-impregnated into carbon, glass or aramid fiber reinforcement materials and exhibits a significant long out-life at room temperature (greater than 6 weeks at 23°C). Other benefits of the resin system include: excellent tack life, low exothermic properties, well adapted to low pressure processing, suitable for a range of processing pressures (0.3 to 5 bar) which enable both vacuum bag and autoclave cure applications, good flexibility and handleability of prepreg, suitable for thin and thick laminates, good quality surface finish, excellent fatigue performance and translucent resin after cure.

The prepregs of this invention are produced by impregnating the fibrous material with the epoxy resin. In order to increase the rate of impregnation, the process is preferably carried out at an elevated temperature so that the viscosity of the resin in reduced. However it must not be so hot for sufficient length of time that premature curing of the resin occurs. Thus, the impregnation process is preferably carried out at temperatures in the range of from 40°C to 80°C.

The resin composition can be spread onto the external surface of a roller and coated onto a paper or other backing material to produce a layer of curable resin. The resin composition can then be brought into contact with the fibrous layer for impregnation perhaps by the passage through rollers. The resin may be present on one or two sheets of backing material, which are brought into contact with the structural fibrous layer and by passing them through heated consolidation rollers to cause impregnation. Alternatively the resin can be maintained in liquid form in a resin bath either being a resin that is liquid at ambient temperature or being molten if it is a resin that is solid or semi solid at ambient temperature. The liquid resin can then be applied to a backing employing a doctor blade to produce a resin film on a release layer such as paper or polyethylene film. The structural fibrous layer may then be placed into the resin and optionally a second resin layer may be provided on top of the fibrous layer.

A backing sheet can be applied either before or after impregnation of the resin. However, it is typically applied before or during impregnation as it can provide a non-stick surface upon which to apply the pressure required for causing the resin to impregnate the fibrous layer.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould.

Once it is created in the mould the prepreg or prepreg stack may be cured by exposure to an externally applied elevated temperature in the range 70°C to 110°C, and optionally elevated pressure, to produce a cured laminate.

The exotherm due to the curing of the prepreg stack may take the temperatures within the stack to above 110°C, however we have found that if the externally applied temperature is within the range of 70°C to 110°C, curing of a prepreg or stack of prepregs based on an epoxy resin of EEW from 150 to 1500 particularly of EEW from 200 to 500 and in the absence of a curing hardener can be accomplished within no more than 4 to 8 hours with an externally applied temperature of 80°C without substantial decomposition of the resin. We have also found that this enables structures in which the resin has a Tg above 80°C, typically in the range 80°C to 110°C more typically 80°C to 100°C to be obtained within an acceptable curing time.

Thus, in further aspect, the invention relates to a process of curing the epoxy resin within a prepreg or prepreg stack as described herein, the process involving exposing the prepreg or prepreg stack to an externally applied temperature in the range 70°C to 110°C for a sufficient time to induce curing of the epoxy resin composition. The process may be performed in a vacuum bag which may be placed in a mould or directly in a mould and is preferably carried out at a pressure of less than 3.0 bar absolute.

The curing process may be carried out at a pressure of less than 2.0 bar absolute. In a particularly preferred embodiment the pressure is less than atmospheric pressure. The curing process may be carried out employing one or more externally applied temperatures in the range of from 70°C to 110°C, for a time sufficient to cure the epoxy resin composition to the desired degree. In particular it is preferred that the curing cycle has a duration of less than three hours.

Curing at a pressure close to atmospheric pressure can be achieved by the so-called vacuum bag technique. This involves placing the prepreg or prepreg stack in an air-tight bag and creating a vacuum on the inside of the bag, the bag may be placed in a mould prior or after creating the vacuum and the resin then cured by externally applied heat to produce the moulded laminate. The use of the vacuum bag has the effect that the prepreg stack experiences a consolidation pressure of up to atmospheric pressure, depending on the degree of vacuum applied.

Upon curing, the prepreg or prepreg stack becomes a composite laminate, suitable for use in a structural application, such as for example an automotive, marine vehicle or an aerospace structure or a wind turbine structure such as a shell for a blade or a spar. Such composite laminates can comprise structural fibres at a level of from 80% to 15% by volume, preferably from 58% to 65% by volume.

The invention has applicability in the production of a wide variety of materials. One particular use is in the production of wind turbine blades. Typical wind turbine blades comprise two long shells which come together to form the outer surface of the blade and a supporting spar within the blade and which extends at least partially along the length of the blade. The shells and the spar may be produced by curing the prepregs or stacks of prepregs of the present invention.

The length and shape of the shells vary but the trend is to use longer blades (requiring longer shells) which in turn can require thicker shells and a special sequence of prepregs within the stack to be cured. This imposes special requirements on the materials from which they are prepared. Carbon fibre based prepregs are preferred for blades of length 30 metres or more particularly those of length 40 metres or more such as 45 to 65 metres. The length and shape of the shells may also lead to the use of different prepregs within the stack from which the shells are produced and may also lead to the use of different prepregs along the length of the shell. In view of their size and complexity the preferred process for the manufacture of wind energy components such as shells and spars is to provide the appropriate prepregs within a vacuum bag, which is placed in a mould and heated to the curing temperature. The bag may be evacuated before or after it is placed within the mould.

It will be appreciated that the size, shape and complexity of these wind turbine structures requiring large volumes of prepregs can produce considerable heat due to the exotherm generated by curing. The opportunities to reduce this exotherm presented by the present invention are therefore particularly valuable in the production of such wind turbine structures.

Furthermore, in order to withstand the conditions to which wind turbine structures are subjected during use it is desirable that the cured prepregs from which the shells and spars are made have a high Tg and preferably a Tg greater than 90°C. In addition the present invention allows this to be accomplished employing reactive epoxy resin such as those with an epoxy equivalent weight of 200 to 500 without requiring unduly long cure times.

The present invention is illustrated but in no way limited by reference to the following examples and to the accompanying figure in which
Figure 1 shows a diagram of the complex viscosity for a resin matrix according to an embodiment of the invention; and
Figure 2 shows a diagram of the temperature inside a prepreg stack of 60 plies of prepreg containing different resin matrices A to F and M according to the Examples.

The first series of experiments employed blends of liquid and semi solid epoxy resins free of dicyandiamide (DDM) blended with differing amounts of the latent urea base curing agent UR 500 (3,3¹-(4-methyl-1,3,phenylene)bis(1,1-Dimethylurea)) and compared with a similar system containing in addition the latent hardener dicyandiamide. The dynamic enthalpies of the formulations were measured as were the Tg of the resin after curing with an externally applied temperature of 80°C for 360 minutes. The tensile properties were measured according to ISO 427. The time to peak temperature was also measured. The results were as follows.

The various resin system blends A,B,C,E,F are prepared by blending a semi-solid bisphenol-A epoxy resin (the same resin for all of blends A,B,C,D,E and F) with a UR500 accelerator at room temperature (21 °C) in the ratios as outlined in the below Table. The resin blend as an epoxy equivalent weight (EEW) in the range of from 180 to 340. The resin system blend D which is a comparative example comprises 95.6% by weight (wt%) of semi-solid bisphenol-A epoxy resin, 1.3% by weight (wt%) of UR500 accelerator and 3.1% by weight (wt%) of a dicyandiamide hardener (Dyhard 100).

### Example 1

**Table 1.**

| **Resin System** | **Semi solid Bisphenol-A-epoxy resin (wt%)** | **UR DYHARD® 500 (wt%)** | **Peak Temperature °C** | **Dynamic Enthalpies Joules/gram (EN6041)** | **Time To Peak Minutes** | **Tg after 360 mins cure at 80°C** |
|---|---|---|---|---|---|---|
| A | 97 | 3 | 147 | 85 | 105 | 87 |
| B | 96.5 | 3.5 | 145 | 93 | 90 | 89 |
| C | 96 | 4 | 149 | 120 | 99 | 89 |
| D | 95.6 | 1.3 | 147 | 290 | 157 | 95** |
| E | 99.6 | 0.4 | 140 | 4 | N.D. | 27*** |
| F | 94 | 6 | 150 | 230 | 85 | 94 |

| | | | | | | |
|---|---|---|---|---|---|---|
| ** Not fully cured, N.D. = Not Detectable, *** No cure observed. | | | | | | |

It can be seen that the products of the invention systems A, B and C have lower dynamic enthalpies and a shorter time to peak temperature than the traditional dicyandiamide containing system D indicating an ability for faster and more controllable cure at an externally applied temperature of 80°C than can be achieved with the system also containing the dicyandiamide. The dynamic enthalpy was measured using a dynamic calorimeter DSC-60/A and the measurement was in accordance with standard EN6041. System E, which contained 0.4% by weight of UR500, could not be cured at temperatures of 80°C. System F, which contained 6% by weight of UR500, cured with a dynamic enthalpy of 230 Jg⁻¹ which is comparable to dynamic enthalpy of system D, the dicyandiamide containing system.

### Example 2

The formulations employed in Example 1 were impregnated onto triaxial glass fibres to produce prepregs containing 40 wt % resin for systems A, B, C, E and F and 43% resin for system D. The impregnation levels for A, B, C, E, F and D are considered to be comparable and the difference in resin impregnation between the samples is not considered to be significant. The prepreg consists of a triaxial cross stitched fabric of total weight of 1200 gsm (g/m²) which contains a fabric layer comprising glass unidirectional fibers in 0° direction of a nominal weight of 567 g/m² which is sandwiched between glass unidirectional fibers in +45° and -45° directions of areal weight of 301 g/m².

Lay-ups of 60 plies of the prepreg are prepared. A calibrated thermocouple is located in the centre of the lay-up to measure the temperature. The lay-ups are each cured at an isothermal 80 °C over 500 minutes which is applied to the stack externally.

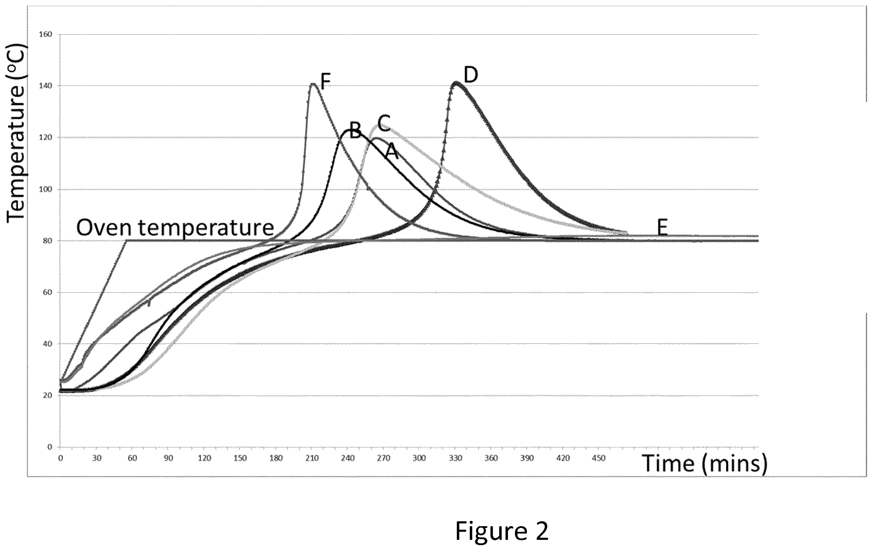

Figure 2 shows the temperature profiles inside the lay-up stack for each of the lay-ups in combination with the oven temperature marked as "oven temperature" which shows an initial heat up rate of 1 °C/ minute, followed by a cure at 80 °C. The lay-ups are marked A to F to correspond with the resin matrices A to F as defined in Example 1.

The time to peak temperature was also measured. The results were as follows:

**Table 2**

| **Resin System** | **Max Temp in Stack °C** | **Time to Max Temp Minutes** |
|---|---|---|
| A | 120 | 240-270 |
| B | 120 | 240-270 |
| C | 120 | 240-270 |
| D | 140 | 360 |
| E | 82 | N.D.* |
| F | 140 | 211 |

| | | |
|---|---|---|
| N.D. = Not detectable, * Formulation did not cure. | | |

These results in Table 2 show that the systems A, B and C of the invention can be cured faster and more completely at externally applied temperatures below 100°C as opposed to the conventional prepreg (system D) which required more time and generated more heat. System E failed to cure at temperatures with an externally applied temperature of 80°C. System F, reached a maximum temperature of 140°C, this combined with a rapid cure resulted in partial decomposition of the matrix within the stack.

Mechanical Testing of Plaques (in accordance with EN2561) based on the laminar structures produced as above showed the following results as set out in Table 3:

**Table 3**

| **Resin System** | **Tensile Strength MPa** | **Tensile Modula (GPa)** |
|---|---|---|
| A | 79 | 3.35 |
| B | 76 | 3.44 |
| C | 80 | 3.46 |
| D | 76 | 3.14 |
| E | N.A. | N.A. |
| F | N.A. | N.A. |

A, B, C, E and F were cured with an externally applied temperature of 80°C for 6 hours, D was cured with an externally applied temperature of 120°C for 1 hour. The results show that comparable mechanical properties are achieved for the two systems with the invention enabling the use of a lower externally applied temperature. Mechanical testing could not be performed on resin system E as the system did not cure after a cure cycle of 80°C externally applied for 6 hours. As mentioned above, the stack containing resin system F exhibited partial matrix decomposition which was obvious upon visual inspection. Such decomposition can adversely affect the mechanical properties and can render a stack unsuitable for use, therefore no mechanical testing was necessary on the stack containing resin system F.

### Example 3

Three products were prepared to represent typical prepregs used for the manufacture of rotor blades for wind turbines employing resin systems. The prepregs were prepared from resin matrices A and C of Example 1 together with three different fibrous reinforcement materials.

The prepregs were as follows (ILSS = Interlaminar shear strength, tensile properties measured in accordance with EN 2563; flexural properties measured in accordance with EN 2744).

**Table4**

| **Prepreg** | **Resin System** | **Wt % Resin** | **Glass Reinforcement Material** | **Number of Layers** |
|---|---|---|---|---|
| 1 | A | 50% | Biaxial | 4 (Tensile) 2 (Flexural ILSS) |
| 2 | A | 38% | Triaxial | 2 (Tensile) 4 (Flexural ILSS) |
| 3 | A | 32% | stitched uniaxial | 1 (Tensile) 4 (Flexural ILSS) |
| 4 | C | 50% | Biaxial | 4 (Tensile) 7 (Flexural ILSS) |
| 5 | C | 38% | Triaxial | 2 (Tensile) 4 (Flexural ILSS) |
| 6 | C | 32% | stitched uniaxial | 1 (Tensile) 4 (Flexural ILSS) |

All the samples were cured in a vacuum bag placed in a mould that was heated with an externally applied temperature of 80°C for 6 hours.

The three materials were tested for mechanical performance and compared with the same performance data of system D cured with an externally applied temperature of 100-120°C.

The results were corrected to 50% fibre volume except for ILSS and were as follows:

**Table 5**

| **System** | **1** | **4** | **D** |
|---|---|---|---|
| **Tensile (EN2563)** | | | Average values +/-15% |
| Tensile Strength (MPa) | 113.00 | 141.50 | 120.00 |
| | | | |
| Norm. E-mod (GPa) | 11.03 | 12.64 | 11.00 |
| | | | |
| Elongation at Fmax (%) | 10.60 | 9.20 | 11.30 |

| **Flexural (EN2744)** | | | |
|---|---|---|---|
| Flexural Strength (MPa) | 301.10 | 311.87 | 230.00 |
| | | | |
| Norm. E-mod (GPa) | 11.62 | 12.33 | 12.00 |
| | | | |
| Deflection at Fmax (%) | 6.00 | 6.00 | N/A |

**Table6**

| **System** | **2** | | **5** | | **D** | |
|---|---|---|---|---|---|---|
| | **0°** | **45°** | **0°** | **45°** | **0°** | **45°** |
| **Tensile (EN2563)** | | | | | Average values +/- 15% | Average values +/- 15 |
| Tensile Strength (MPa) | 517.26 | 272.00 | 515.21 | 256.64 | 500.00 | 270.00 |
| | | | | | | |
| Norm. E-mod (GPa) | 24.47 | 19.25 | 25.33 | 25.21 | 21.00 | 15.00 |
| | | | | | | |
| Elongation at Fmax (%) | 2.60 | 2.30 | 2.50 | 2.30 | 3.60 | 2.94 |

| **Flexural (EN2744)** | | | | | Average values +/- 15% | Average values +/- 15 |
|---|---|---|---|---|---|---|
| Flexural Strength (MPa) | 762.85 | 510.38 | 703.78 | 480.24 | 700.00 | 430.00 |
| | | | | | | |
| Norm. E-mod (GPa) | 18.39 | 17.41 | 21.38 | 14.93 | 22.00 | 16.00 |
| | | | | | | |
| Deflection at Fmax (%) | 4.20 | 2.90 | 3.00 | 3.80 | N/A | N/A |

| **ILSS (EN2563)** | | | | | Average values +/- 15 | Average values +/- 15 |
|---|---|---|---|---|---|---|
| ILSS (MPa) | 44.10 | 46.50 | 51.00 | 40.10 | 49.00 | 39.00 |

**Table 7. In Tables 5,6 and 7 Fmax signifies the maximum force which can be applied before sample disintegration.**

| **System** | **3** | **6** | **D** |
|---|---|---|---|
| | **0°** | **0°** | **0°** |
| **Tensile (EN2563)** | | | Average values +/-15% |
| | | | |
| Tensile Strength (MPa) | 925.54 | 957.42 | 885.00 |
| | | | |
| Norm. E-mod (GPa) | 44.91 | 46.49 | 38.30 |
| | | | |
| Elongation at Fmax (%) | 2.20 | 2.20 | 3.70 |

| **Flexural (EN2744)** | | | |
|---|---|---|---|
| Flexural Strength (MPa) | 1016.79 | 995.56 | 975.00 |
| | | | |
| Norm. E-mod (GPa) | 26.03 | 25.96 | 31.00 |
| | | | |
| Deflection at Fmax (%) | 3.00 | 3.00 | N/A |

| **ILSS (EN2563)** | | | Average values +/- 15 |
|---|---|---|---|
| ILSS (MPa) | 53.70 | 55.00 | 55.00 |

As can be seen from the Tables the mechanical performance of systems 1 to 6 which were cured with an externally applied temperature of 80°C was found to be at least as good as the performance of system D which was cured with an externally applied temperature of 100-120°C.

### Example 4

Resin system A of Example 1 was cured at different temperatures. The time to 95% conversion of the resin was measured by DSC (ISO 11357). The results were as follows.

| **Temperature** | **Cure Time*** | **Tg cured** |
|---|---|---|
| 80°C | 240min | 85-90°C |
| 90°C | 130min. | 100-110°C |
| 100°C | 75min | 100-110°C |
| 110°C | 60min | 100-110°C |
| 120°C | 55min | 100-110°C |

| | | |
|---|---|---|
| *time to 95% conversion | | |

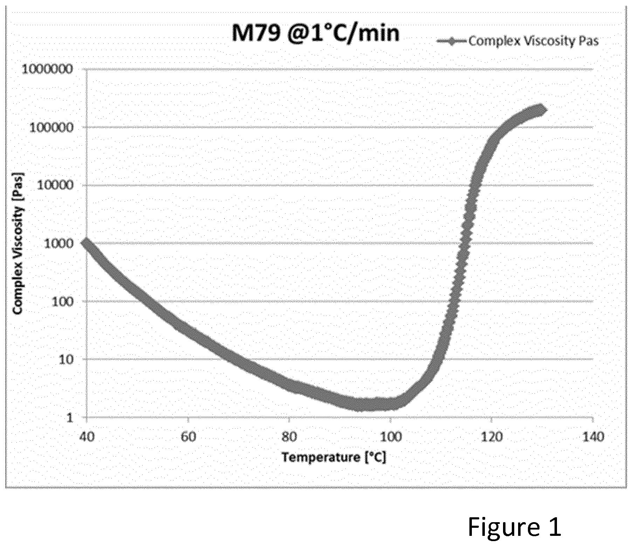

In Figure 1, the dynamic viscosity of the resin system A is shown over the temperature range of from 40 to 130 °C. The minimum viscosity is 1.6 Pa.s at a temperature of 94 °C.

There is thus provided a prepreg, a resin system, a laminate and a process as herein described. The process is particularly suitable for the production of wind turbine structures comprising providing a prepreg of stack of prepregs comprising a mixture of fibrous reinforcement and from 20 % to 85 wt % of an epoxy resin of EEW 150 to 1500 and containing from 0.5 to 10 wt % of a urea based curing agent and being free of dicyandiamide within a vacuum bag, placing the vacuum bag within a mould and creating a vacuum within the bag prior to or after placement in the mould and curing the epoxy resin by application of an externally applied temperature in the range 70°C to 110°C for a period of from 4 to 8 hours. The resin is preferably a high viscosity resin having a viscosity at room temperature (21°C) in excess of 1800 mPa.s. The stack of prepregs in the aforesaid process would typically comprise at least 20 layers. The stack of prepregs has a thickness of from 2mm to 100mm. The fibrous reinforcement is preferably a carbon fibre. The wind turbine structure may be in the form of a shell for a blade of the wind turbine and has a length greater than 40 metres or from 45 to 65 metres.

## Claims

1. A prepreg comprising a mixture of a fibrous reinforcement and an epoxy resin containing from 20% to 85% by weight of an epoxy resin of epoxy equivalent weight (EEW) from 150 to 1500, said resin comprising from 0.5 to 10 wt% based on the weight of the epoxy resin of a urea based curing agent and being free of dicyandiamide, said resin further being curable by an externally applied temperature in the range of 70°C to 110°C and exhibiting a dynamic enthalpy on the range of from 80 to 120J/g as measured by differential scanning calorimetry in accordance with ISO 11357 over temperatures of from -40 to 270°C at 10°C/min.

2. A stack of prepregs containing an epoxy resin of epoxy equivalent weight from 150 to 1500, the resin comprising from 0.5 to 10 wt% based on the weight of the epoxy resin of a urea based curing agent and being free of dicyandiamide, said resin further being curable by an externally applied temperature in the range of 70°C to 110°C and exhibiting a dynamic enthalpy on the range of from 80 to 120J/g as measured by differential scanning calorimetry in accordance with ISO 11357 over temperatures of from -40 to 270°C at 10°C/min, said stack of prepregs containing at least 2 or more prepreg layers, typically 40, 60 or more layers.

3. A prepreg or stack of prepregs according to claim 1 or 2, wherein the resin comprises from 0.5 to 5 wt % of the urea based curing agent.

4. A prepreg and stacks of prepregs according to any of the preceding claims that can be cured in less than ten hours particularly less than eight hours.

5. The use of a prepreg or a stack of prepregs according to any of Claims 1 to 4 for the production of wind turbine structures.

6. A process of curing the epoxy resin within a prepreg or prepreg stack according to any of claims 1 to 74, the process involving exposing the prepreg or prepreg stack to an externally applied temperature in the range 70°C to 110°C for up to 8 hours at a pressure of less than 3.0 bar absolute

7. A process according to Claim 8 in which the epoxy resin has an EEW of from 200 to 500.

8. A process for the production of wind turbine structures comprising providing a prepreg or stack of prepregs comprising a mixture of fibrous reinforcement and from 20 % to 85 wt % of an epoxy resin of epoxy equivalent weight (EEW) of 150 to 1500, said resin comprising from 0.5 to 10 wt% based on the weight of the epoxy resin of a urea based curing agent and being free of dicyandiamide and exhibiting a dynamic enthalpy on the range of from 80 to 120J/g as measured by differential scanning calorimetry in accordance with ISO 11357 over temperatures of from -40 to 270°C at 10°C/min, within a vacuum bag, placing the vacuum bag within a mould and creating a vacuum within the bag prior to or after placement in the mould, and curing the epoxy resin by application of an externally applied temperature in the range 70°C to 110°C for a period of from 4 to 8 hours.

9. A resin matrix comprising an epoxy resin containing from 20% to 85% by weight of an epoxy resin of epoxy equivalent weight from 150 to 1500, said resin being curable by an externally applied temperature in the range of 70°C to 110°C, preferably from 70°C to 90°C and exhibiting a dynamic enthalpy on the range of from 80 to 120J/g as measured by differential scanning calorimetry in accordance with ISO 11357 over temperatures of from -40 to 270°C at 10°C/min, the resin containing from 0.5 to 5 wt % of a urea based curing agent, preferably a bis urea curing agent, and being free of dicyandiamide.

## Patentansprüche

1. Prepreg, umfassend eine Mischung aus einer faserigen Verstärkung und einem Epoxyharz, das 20 Gew.% bis 85 Gew.% eines Epoxyharzes mit einem Epoxy-Äquivalentgewicht (EEW) von 150 bis 1500 enthält, wobei das Harz 0,5 bis 10 Gew.%, bezogen auf das Gewicht des Epoxyharzes, von einem Härtungsmittel auf Harnstoffbasis umfasst und frei von Dicyandiamid ist, wobei das Harz des Weiteren durch eine von außen angewendete Temperatur im Bereich von 70 °C bis 110 °C härtbar ist und eine dynamische Enthalpie im Bereich von 80 bis 120 J/g zeigt, gemessen mittels Differentialscanningkalorimetrie gemäß ISO 11357 über Temperaturen von -40 bis 270 °C mit 10 °C/min.

2. Stapel von Prepregs, die ein Epoxyharz mit einem Epoxy-Äquivalenzgewicht von 150 bis 1500 enthalten, wobei das Harz 0,5 bis 10 Gew.%, bezogen auf das Gewicht des Epoxyharzes, von einem Härtungsmittel auf Harnstoffbasis umfasst und frei von Dicyandiamid ist, wobei das Harz des Weiteren durch eine von außen angewendete Temperatur im Bereich von 70 °C bis 110 °C härtbar ist und eine dynamische Enthalpie im Bereich von 80 bis 120 J/g zeigt, gemessen mittels Differentialscanningkalorimetrie gemäß ISO 11357 über Temperaturen von -40 bis 270 °C mit 10 °C/min, wobei der Stapel von Prepregs mindestens 2 oder mehr Prepreg-Schichten enthält, typischerweise 40, 60 oder mehr Schichten.

3. Prepreg oder Stapel von Prepregs nach Anspruch 1 oder 2, wobei das Harz 0,5 bis 5 Gew.% des Härtungsmittels auf Harnstoffbasis umfasst.

4. Prepreg und Stapel von Prepregs nach einem der vorhergehenden Ansprüche, das bzw. der in weniger als zehn Stunden, insbesondere weniger als acht Stunden gehärtet werden kann.

5. Verwendung eines Prepregs oder eines Stapels von Prepregs nach einem der Ansprüche 1 bis 4 zur Herstellung von Windturbinenstrukturen.

6. Verfahren zum Härten des Epoxyharzes innerhalb eines Prepregs oder Prepreg-Stapels nach einem der Ansprüche 1 bis 4, wobei das Verfahren beinhaltet, dass das Prepreg oder der Prepreg-Stapel einer von außen angewendeten Temperatur im Bereich von 70 °C bis 110 °C für bis zu 8 Stunden bei einem Druck von weniger als 3,0 bar absolut ausgesetzt wird.

7. Verfahren nach Anspruch 8, wobei das Epoxyharz ein EEW von 200 bis 500 aufweist.

8. Verfahren zur Herstellung von Windturbinenstrukturen, umfassend Bereitstellen eines Prepregs oder Stapels von Prepregs, umfassend eine Mischung aus faseriger Verstärkung und 20 Gew.% bis 85 Gew.% eines Epoxyharzes mit einem Epoxy-Äquivalenzgewicht (EEW) von 150 bis 1500, wobei das Harz 0,5 bis 10 Gew.%, bezogen auf das Gewicht des Epoxyharzes, von einem Härtungsmittel auf Harnstoffbasis umfasst und frei von Dicyandiamid ist und eine dynamische Enthalpie im Bereich von 80 bis 120 J/g zeigt, gemessen mittels Differentialscanningkalorimetrie gemäß ISO 11357 über Temperaturen von -40 bis 270 °C mit 10 °C/min, in einem Vakuumbeutel, Platzieren des Vakuumbeutels in einer Form und Erzeugen eines Vakuums in dem Beutel vor oder nach dem Platzieren in der Form, und Härten des Epoxyharzes durch Anwenden einer von außen angewendeten Temperatur im Bereich von 70 °C bis 110 °C für einen Zeitraum von 4 bis 8 Stunden.

9. Harzmatrix, umfassend ein Epoxyharz, das 20 Gew.% bis 85 Gew.% eines Epoxyharzes mit einem Epoxy-Äquivalenzgewicht von 150 bis 1500 enthält, wobei das Harz durch eine von außen angewendete Temperatur im Bereich von 70 °C bis 110 °C, vorzugsweise 70 °C bis 90 °C härtbar ist und eine dynamische Enthalpie im Bereich von 80 bis 120 J/g zeigt, gemessen mittels Differentialscanningkalorimetrie gemäß ISO 11357 über Temperaturen von -40 bis 270 °C mit 10 °C/min, wobei das Harz 0,5 bis 5 Gew.% eines Härtungsmittels auf Harnstoffbasis, vorzugsweise eines Bisharnstoff-Härtungsmittels enthält und frei von Dicyandiamid ist.

## Revendications

1. Préimprégné comprenant un mélange d'un renfort fibreux et d'une résine époxy contenant 20% jusqu'à 85% en poids d'une résine époxy d'un poids d'équivalents époxy (EEW) de 150 jusqu'à 1500, ladite résine comprenant 0,5 jusqu'à 10% en poids, sur la base du poids de la résine époxy, d'un agent de durcissement à base d'urée et étant exempte de dicyandiamide, ladite résine pouvant en outre être durcie par l'application d'une température externe dans la plage de 70°C jusqu'à 110°C et étant dotée d'une enthalpie dynamique dans la plage de 80 jusqu'à 120 J/g telle que mesurée par calorimétrie différentielle à balayage selon la norme ISO 11357 dans une plage de températures de -40 jusqu'à 270°C à 10°C/min.

2. Empilement de préimprégnés contenant une résine époxy d'un poids d'équivalents époxy de 150 jusqu'à 1500, la résine comprenant 0,5 jusqu'à 10% en poids, sur la base du poids de la résine époxy, d'un agent de durcissement à base d'urée et étant exempte de dicyandiamide, ladite résine pouvant en outre être durcie par l'application d'une température externe dans la plage de 70°C jusqu'à 110°C et étant dotée d'une enthalpie dynamique dans la plage de 80 jusqu'à 120 J/g telle que mesurée par calorimétrie différentielle à balayage selon la norme ISO 11357 dans une plage de températures de -40 jusqu'à 270°C à 10°C/min, ledit empilement de préimprégnés contenant au moins 2 couches de préimprégnés ou plus, habituellement 40, 60 couches ou plus.

3. Préimprégné ou empilement de préimprégnés selon la revendication 1 ou 2, la résine comprenant 0,5 jusqu'à 5% en poids de l'agent de durcissement à base d'urée.

4. Préimprégné ou empilements de préimprégnés selon l'une quelconque des revendications précédentes pouvant être durci(s) en moins de dix heures, en particulier en moins de huit heures.

5. Utilisation d'un préimprégné ou d'un empilement de préimprégnés selon l'une quelconque des revendications 1 à 4 pour la production de structures d'éoliennes.

6. Procédé de durcissement de la résine époxy dans un préimprégné ou dans un empilement de préimprégnés selon l'une quelconque des revendications 1 à 4, le procédé incluant l'exposition du préimprégné ou de l'empilement de préimprégnés à une température appliquée de manière externe dans la plage de 70°C jusqu'à 110°C pendant jusqu'à 8 heures à une pression absolue de moins de 3,0 bars.

7. Procédé selon la revendication 8, la résine époxy ayant un EEW de 200 jusqu'à 500.

8. Procédé de production de structures d'éoliennes comprenant de mettre à disposition un préimprégné ou un empilement de préimprégnés comprenant un mélange de renfort fibreux et 20% jusqu'à 85% d'une résine époxy d'un poids d'équivalents époxy (EEW) de 150 jusqu'à 1500, ladite résine comprenant 0,5 jusqu'à 10% en poids, sur la base du poids de la résine époxy, d'un agent de durcissement à base d'urée et étant exempte de dicyandiamide et étant dotée d'une enthalpie dynamique dans la plage de 80 jusqu'à 120 J/g telle que mesurée par calorimétrie différentielle à balayage selon la norme ISO 11357 dans une plage de température de -40 jusqu'à 270°C à 10°C/min, dans un sac sous vide, de placer le sac sous vide dans un moule et de créer un vide dans le sac avant ou après le placement dans le moule et de durcir la résine époxy par l'application d'une température externe dans la plage de 70°C jusqu'à 110°C pendant un temps de 4 jusqu'à 8 heures.

9. Matrice de résine comprenant une résine époxy contenant 20% jusqu'à 85% en poids d'une résine époxy d'un poids d'équivalents époxy de 150 jusqu'à 1500, ladite résine pouvant être durcie par l'application d'une température externe de 70°C jusqu'à 110°C, préférablement de 70°C jusqu'à 90°C et étant dotée d'une enthalpie dynamique dans la plage de 80 jusqu'à 120 J/g telle que mesurée par calorimétrie différentielle à balayage selon la norme ISO 11357 dans une plage de température de -40 jusqu'à 270°C à 10°C/min, la résine contenant 0,5 jusqu'à 5% en poids d'un agent de durcissement à base d'urée, préférablement un agent de durcissement du type bis-urée et étant exempte de dicyandiamide.
